Europäisches Patentamt

European Patent Office

Office européen des brevets

(19)

(11) Publication number: **0 503 120 B1**

# EUROPEAN PATENT SPECIFICATION

(45) Date of publication of patent specification: **14.06.95**  (51) Int. Cl.6: **B41J  2/355**

(21) Application number: **91103972.5**

(22) Date of filing: **14.03.91**

(54) **Recorder using a line thermal head.**

(43) Date of publication of application:
**16.09.92 Bulletin  92/38**

(45) Publication of the grant of the patent:
**14.06.95 Bulletin  95/24**

(84) Designated Contracting States:
**DE FR GB**

(56) References cited:
**EP-A- 0 279 637**
**EP-A- 0 304 916**
**EP-A- 0 329 369**
**US-A- 4 723 132**
**US-A- 4 783 667**

(73) Proprietor: **Yokogawa Electric Corporation**
**9-32, Nakacho 2-chome**
**Musashino-shi**
**Tokyo 180 (JP)**

(72) Inventor: **Nakayama, Etsuro**
**1-13-26, Honcho**
**Higashimurayama-shi,**
**Tokyo (JP)**

(74) Representative: **Henkel, Feiler, Hänzel & Part-**
**ner**
**Möhlstrasse 37**
**D-81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.09/3.3.3)

## Description

## BACKGROUND OF THE INVENTION

### Field of the Invention:

The present invention relates to a recorder for effecting waveform recording on recording paper using a line thermal head and, more particularly, to improvements of a stepped portion recorded owing to the feeding pitch of recording paper.

### Description of the Related Art:

A recorder for recording waveform is known in which a plurality of heating elements arranged at fixed intervals for constituting a line thermal head are selectively driven and heated, color is developed in thermosensitive recording paper on the basis of the heat thus produced, or ink on an ink ribbon is transferred onto recording paper, thereby effecting recording.

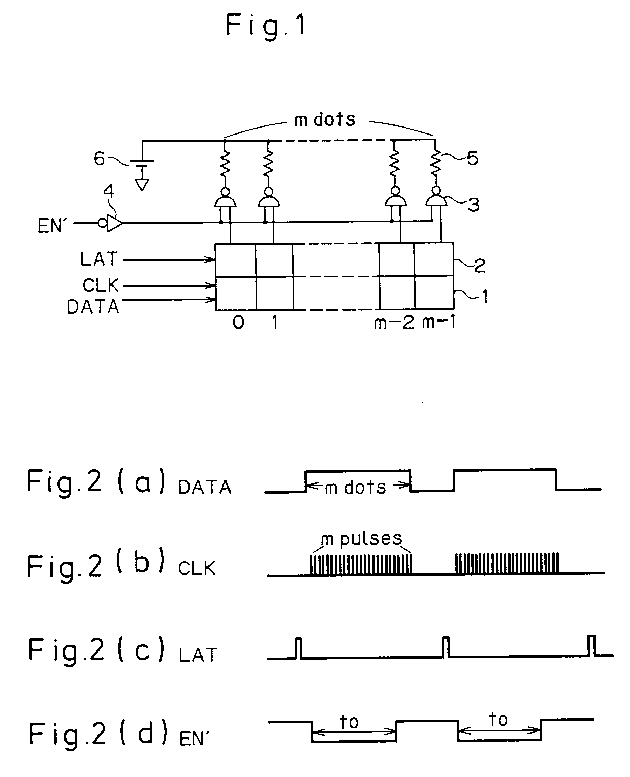

Fig. 1 is a block diagram illustrating such a conventional recorder, and Fig. 2 is a timing chart illustrating an example of the operation of the circuit shown in Fig. 1. Data corresponding to m dots for one line, shown in the part (a) of Fig. 2, are consecutively stored in a shift register 1 in response to m clock pulses CLK shown in the part (b) of Fig. 2. When the data for one line are stored in the shift register 1, these data are latched by latches 2 by means of a latch pulse LAT shown in the part (c) of Fig. 2. Output data from the latches 2 are applied to the respective one input terminals of NAND gates 3. An enable signal EN' shown in the part (d) of Fig. 2 is commonly applied to the other input terminals of the NAND gates 3 via an inverter 16. It should be noted that an apostrophe (') indicates that the signal operates on the basis of negative logic. Output terminals of the NAND gates 3 are connected to one ends of heating elements 5 constituting a line thermal head, and a plus terminal of a dc power source 6 is commonly connected to the other ends of the heating elements 5.

In this configuration, interpolated data are added as recording data for each line in such a manner as to simultaneously drive the plurality of heating elements that are arranged continuously so as to record a maximum value and a minimum value of a measured value in each measurement period, for instance, the heating elements including one corresponding the maximum value and one corresponding to the minimum value.

As a result, during a time $t_0$ when the enable signal EN' is at L level, a driving current flows across the heating element from the dc power source 6, and recording is effected on the basis of one line of recording data. Then, unillustrated recording paper is fed one line at a time at a predetermined pitch upon completion of the recording operation of one line.

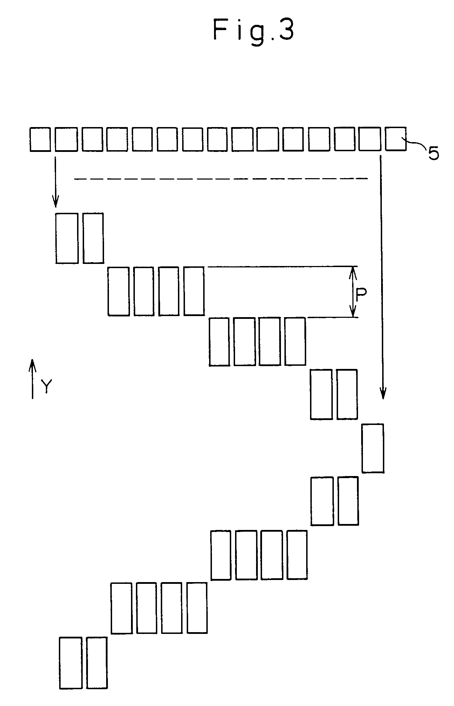

With such a conventional arrangement, however, since the recording paper is fed by one line each time the recording of one line is completed, a large stepped portion appears owing to the feeding pitch P of the recording paper, as shown in Fig. 3. It should be noted that arrow Y indicates the feeding direction of the recording paper. This stepped portion becomes large as the feeding speed of the recording paper increases, and results in the reproduceability of the measured waveform, so that it is not favorable.

Meanwhile, if the driving speed of the heating elements 5 is increased, the heating elements 5 are driven before their temperature is lowered sufficiently, so that the temperature becomes gradually high. Hence, in cases where thermosensitive recording paper is used, the area which undergoes color development becomes large, possibly resulting in the lowering of the printing quality and burning the heating elements in a worst case.

Accordingly, in order to overcome the above-described drawback, thermal history control is effected whereby the amplitude and width of the pulse applied to the heating elements is controlled on the basis of the history of the driving cycles of the heating elements. However, this method does not employ accumulated heat temperature data of the heating elements, so that high-accuracy control cannot be expected.

## SUMMARY OF THE INVENTION

Accordingly, an object of the present invention is to provide a recorder capable of obtaining results of recording in which stepped portions attributable to the feeding pitch of recording paper and reproducibility of measured waveform is high.

Another object of the invention is to provide an effective driving method which takes into account data on accumulated heat temperature using the history of driving heating elements constituting a line thermal head.

In addition, still another object of the present invention is to facilitate the discrimination of results of recording in a case where a plurality of signals are recorded simultaneously.

To this end, in accordance with the present invention, there is provided a recorder for effecting recording on recording paper on the basis of heat generated by selectively driving a plurality of heating elements arranged at fixed intervals in such a manner as to constitute a line thermal head, comprising:

a thermal history circuit including: a first memory in which accumulated heat temperature data concerning the recording operation of the heating elements is stored in advance and which is adapted to read the accumulated heat temperature data for an ensuing cycle by using as its addresses present accumulated heat temperature data and the presence or absence of recording; a second memory for temporarily storing the accumulated heat temperature data read from the first memory; a comparison circuit for comparing the accumulated heat temperature data temporarily stored in the second memory with a set temperature set in advance; and a switching element for controlling the recording operation of the heating elements in correspondence with the result of comparison by the comparison circuit; and

a digital delay circuit including: a data selector for selectively outputting initially-set-number-of-driving-intervals data of the heating elements or number-of-driving-cycles data in which data is subtracted by the number of driving cycles, in accordance with the presence or absence of recording data which is consecutively renewed in synchronism with the operation of feeding the recording paper; a data transfer circuit for transforming output data from the data selector into recording data and for imparting the recording data to the switching element of the thermal history circuit; a subtraction circuit for subtracting "1" with respect to a natural number of the output data from the data selector; and a third memory for temporarily storing output data from the subtraction circuit and for imparting the data to the data selector.

The above and other objects, features and advantages of the present invention will become more apparent from the following detailed description of the invention when read in conjunction with the accompanying drawings.

## BRIEF DESCRIPTION OF THE DRAWINGS

Fig. 1 is a block diagram illustrating an example of a conventional recorder of the type described above;

Fig. 2 is a timing chart illustrating an example of the operation of the circuit shown in Fig. 1;

Fig. 3 is a diagram illustrating an example of recording using the conventional recorder;

Fig. 4 is a block diagram illustrating an embodiment of the present invention;

Fig. 5 is a timing chart illustrating the operation of Fig. 4;

Fig. 6 is a diagram illustrating an example of recording using the recorder shown in Fig. 4;

Fig. 7 is a timing chart illustrating the operation of a digital delay circuit shown in Fig. 4;

Fig. 8 is a diagram illustrating changes in data in the digital delay circuit shown in Fig. 4;

Fig. 9 is a diagram illustrating patterns of driving pulses based on the timing chart shown in Fig. 5;

Fig. 10 is a perspective view of an essential portion of Fig. 4;

Fig. 11 is a timing chart explaining the operation of a thermal history circuit shown in Fig. 4;

Fig. 12 is an explanatory diagram of simulation data used in the present invention;

Fig. 13 is a block diagram illustrating an example of application of the present invention; and

Fig. 14 is a diagram illustrating changes in data in the digital delay circuit shown in Fig. 13.

## DESCRIPTION OF THE PREFERRED EMBODIMENTS

Referring now to the accompanying drawings, a detailed description will be given of the preferred embodiments of the present invention.

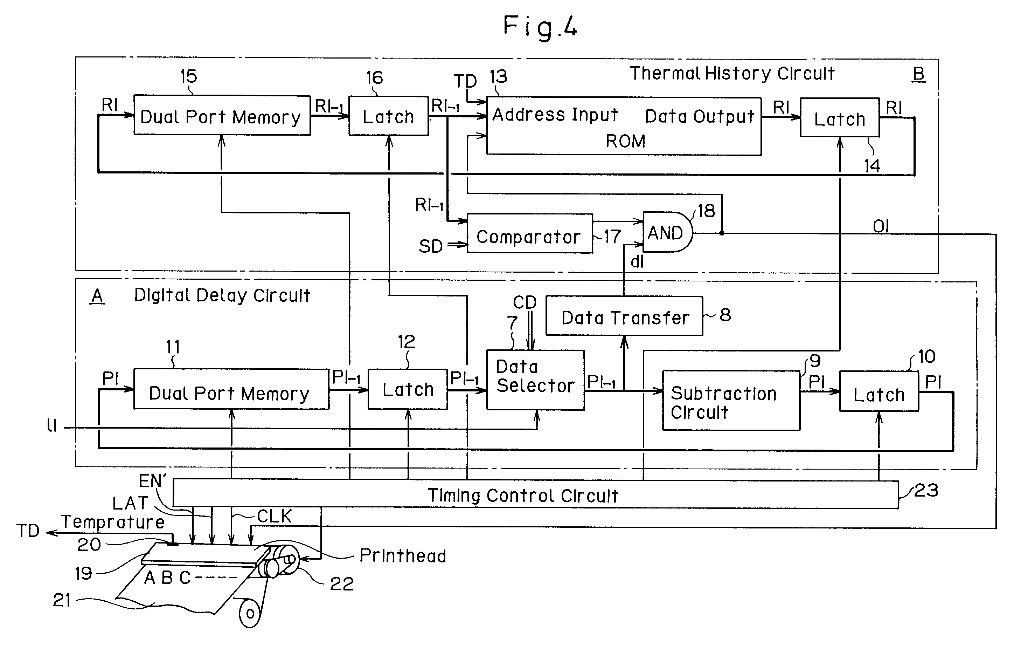

Fig. 4 is a block diagram illustrating an embodiment of the present invention. In the drawing, reference character A denotes a digital delay circuit for generating recording data for driving heating elements, and reference character B denotes a thermal history circuit for controlling the heating temperature of the heating elements.

In the digital delay circuit, input data $D_i$ to be recorded is inputted to a data selector 7 as a selection signal. Output data $P_{i-1}$ from a dual port memory 11 is transmitted to the data selector 7 via a latch 12. At the same time, data CD is set in advance in the data selector 7. The data selector 7 outputs data selected in correspondence with a "1" or "0" of the input data $D_i$ to a data transfer circuit 8 as $P_{i-1}$, and outputs the same to a subtraction circuit 9. In cases where the data $P_{i-1}$ transmitted from the data selector 7 is not "0", the data transfer circuit 8 transmits data $d_i'$ of level "1" to one input terminal of an NAND gate 18 constituting a part of the thermal history circuit B. An OR gate, for instance, is used as the data transfer circuit 8. The subtraction circuit 9 performs a subtraction $P_i = P_{i-1} - 1$ with respect to the input data $P_{i-1}$. However, the subtraction circuit 9 performs the subtraction only with respect to natural numbers, and when $P_{i-1}$ is 0, for example, the subtraction circuit 9 outputs 0 as it is as $P_i$. The result $P_i$ of the calculation is temporarily stored in the dual port memory 11 via a latch 10, the output data $P_{i-1}$ from this dual port memory 11 is transmitted to the data selector 7 via the latch 12.

In the thermal history circuit B, accumulated heat temperature data concerning the recording operation of the plurality of heating elements constituting a printhead 19 is stored in advance in a memory 13. The accumulated heat temperature data stored in the memory 13 is read as accumulated heat temperature data $R_i$ for an ensuing cycle by using as addresses the predetermined present accumulated heat temperature data $R_{i-1}$ and the output data from the AND gate 18 concerned with the presence or absence of recording, in correspondence with the ambient temperature of the printhead 19 measured by a temperature sensor 20 such as a thermistor. The accumulated heat temperature data $R_i$ read from this memory 13 is temporarily stored in a dual port memory 15 via a latch 14. The accumulated heat temperature data $R_i$ temporarily stored in the memory 15 is read as the aforementioned present accumulated heat temperature data $R_{i-1}$, and is imparted to the memory 13 as an address and is also imparted to one input terminal of a comparator 17. Set temperature data SD which is set in advance is imparted to the other input terminal of the comparator 17. An output signal from this comparator 17 is imparted to the other input terminal of the AND gate 18. Output data $O_i$ from this AND gate 18 is transmitted to the memory 13 as an address, as described above, and is transmitted to the heating elements of the printhead 19 as a drive signal. Thermosensitive recording paper 21 undergoes color development for recording through the heating of the plurality of heating elements constituting the printhead 19, and is fed by a motor 22 at a predetermined speed. A timing control circuit 23 outputs control signals for controlling the operation of the respective components. It should be noted that the same arrangement as that shown in Fig. 1 can be used as the printhead 19.

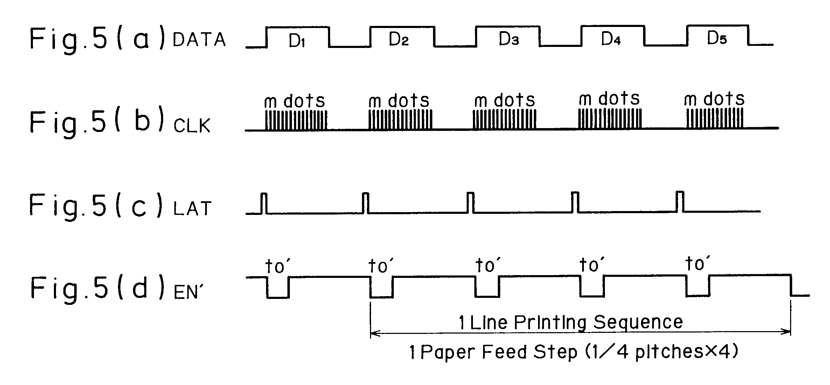

The operation of the recorder thus arranged will now be described with reference to a timing chart shown in Fig. 5.

In Fig. 5, m-dot data DATA is transferred transmitted times to the printhead 19, and the enable signal EN' is imparted four times, thereby printing one line. Here, a pulse width $t_0'$ of the enable signal EN' is assumed to be one-fourth of a pulse width $t_0$ shown in Fig. 2. That is, energy applied to the heating elements 5 in one driving cycle is one-fourth of the case shown in Fig. 2, so that the recording of one line is effected by the transmission of data DATA and the enable signal EN' in four cycles. It should be noted that the feeding of the recording paper 21 is synchronized with this sequence, and the recording paper 21 is fed in steps by dividing the feeding process into one-fourth steps.

In such a driving method, since the pulse width $t_0'$ of the enable signal EN' is fixed, the recording conditions of a recording sequence starting from, for instance, data $D_1$ up to data $D_4$ and the recording conditions of a recording sequence starting from, for instance, data $D_2$ up to data $D_5$ are equal. Accordingly, the paper feeding speed of the recording paper 21 is equal. That is, if a data transmission period $Dn$ shown in Fig. 5 is assumed to be one-fourth of the data transmission period shown in Fig. 2, in accordance with the driving method shown in Fig. 5, the resolution along the direction of the time axis (the direction of feeding of the recording paper 21) becomes four times that of the driving method shown in Fig. 1.

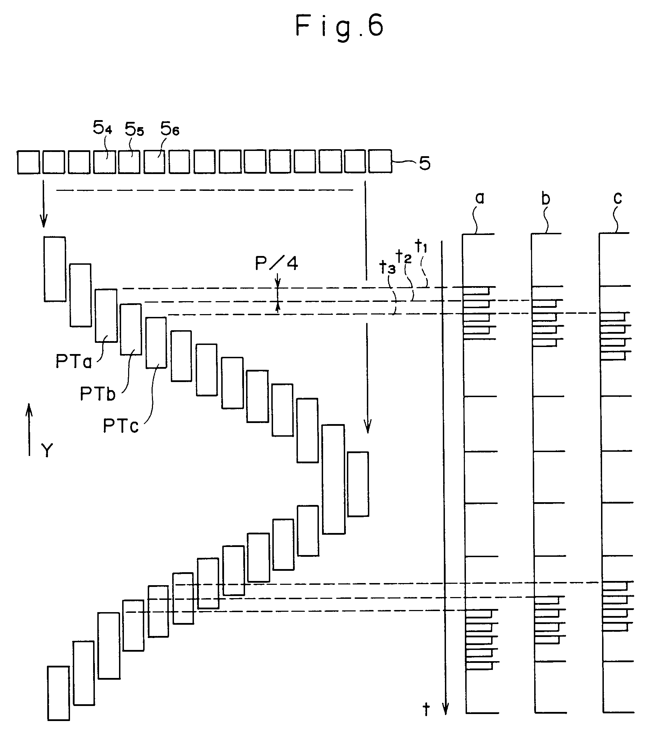

Fig. 6 is a diagram illustrating an example of such a recording method. The recording paper is fed by one-fourths of the pitch P shown in Fig. 3. The heating elements 5 are driven in four operations in synchronism with the paper feeding pitch, as shown in the parts $\underline{a}$ - c of Fig. 6. The part $\underline{a}$ shows the state of a heating element $5_4$ being driven; the part b shows the state of a heating element $5_5$ being driven; the part c shows the state of a heating element $5_6$ being driven. A recording pattern PTa obtained by the heating element $5_4$ is recorded in four continuous driving operations as the input data $D_i$ "1" is added to the data selector 7 at a timing $t_1$; a recording pattern PTb obtained by the heating element $5_5$ is recorded in four continuous driving operations as the input data $D_i$ "1" is added to the data selector 7 at a timing $t_2$; and a recording pattern PTc obtained by the heating element $5_6$ is recorded in four continuous driving operations as the input data $D_i$ "1" is added to the data selector 7 at a timing $t_3$. Similarly, each subsequent recording pattern is recorded as the heating elements are continuously driven in four operations in synchronism with the paper feeding pitch. It should be noted that if the input data $D_i$ "1" is added again to the data selector 7 while the heating element is being driven, the four drivings are executed anew from that point of time, so that its recording pattern becomes long.

As is apparent from the result of recording shown in Fig. 6, the resolution of the paper feeding pitch becomes high as compared with the result of the conventional recording shown in Fig. 3. Hence, a maximum height of the stepped portion attributable to the paper feeding pitch in a case where the paper is fed at an identical speed becomes smaller than in the conventional case, and the curve of the waveform recorded becomes smooth. In addition, since the input data is fetched in synchronism with the paper feeding timing, the waveform of signals having a higher frequency can be recorded more faithfully than in the conventional case.

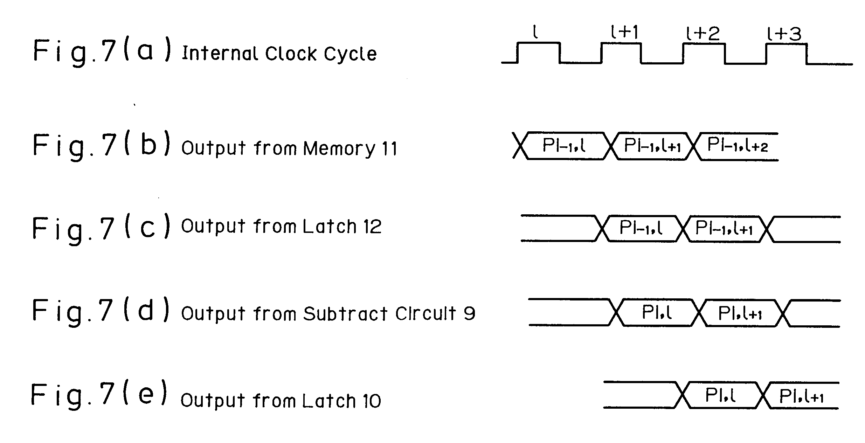

Fig. 7 is a timing chart explaining the operation of the digital delay circuit A. Trigger data corresponding to each dot is stored in the memory 11, and, for instance, trigger data $P_{i-1,\,\ell}$ corresponding to an m-$\ell$th dot is stored in an address $A\ell$. As the address $A\ell$ is applied from the timing control circuit 23 at the $\ell$th clock pulse of the internal clock CLK as shown in the part (a), the trigger data $P_{i-1,\ell}$ corresponding to the m - $\ell$th dot as shown in the part (b) is read from the memory 11. The trigger data read from the memory 11 is latched by the latch 12, as shown in the part (c), at the rise of the $\ell$ +1st clock pulse, and is imparted to the data selector 7. If the input data $d_{i,\ell}$ is "0", the data selector 7 outputs $P_{i-1,\ell}$ as it is, and if the input data $d_{i,\ell}$ is "1", the data selector 7 outputs the data CD set in advance therein instead of the input data $P_{i-1,\ell}$. In the case of this embodiment, since recording is effected by dividing one line into four portions, the data selector 7 outputs "4". The output data from the data selector 7 is transmitted to the data transfer circuit 8 and the subtraction circuit 9. When the data $P_{i-1,\ell}$ imparted from the data selector 7 is not "0", the data transfer circuit 8 sets the data $d_i'$ to "1" and imparts the same to the AND gate 18 of the thermal history circuit B. The subtraction circuit 9 performs the calculation of $P_{i-1,\ell}$-l and outputs the result of calculation $P_{i,\ell}$ to the latch 10, as shown in the part (d). The latch 10 latches the result of calculation $P_{i,\ell}$ of the subtraction circuit 9 at the rise of the $\ell$ + 2nd clock pulse, as shown in the part (e), and outputs the data $P_{i,\ell}$ to the memory 11 as the address A$\ell$ during that clock cycle.

Such a series of operation are repeated m times with respect to the intervals of the respective data $D_1$ - $D_5$ shown in the part (a) of Fig. 5.

Next, a description will be given of how the data on a certain address A$\ell$ of the memory 11 undergoes changes as the interval cycle is repeated.

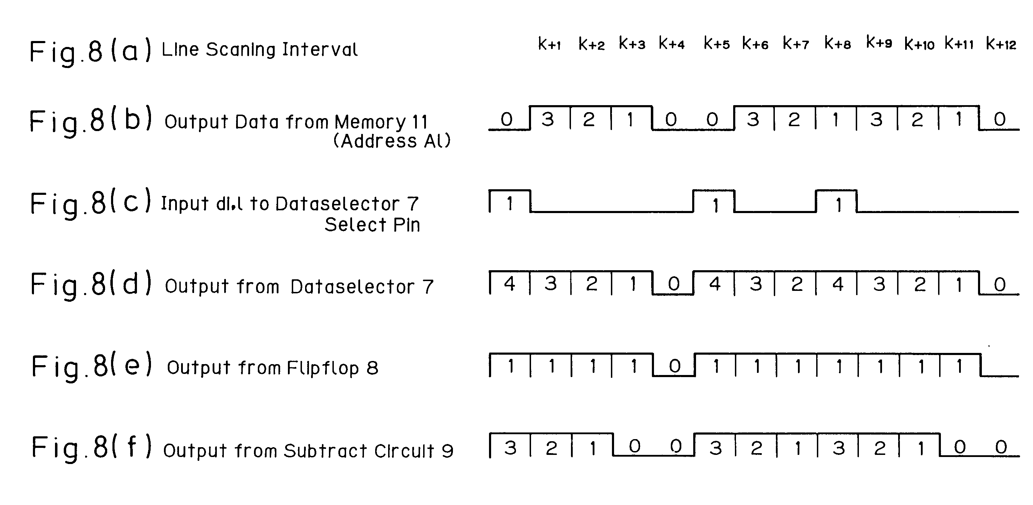

Fig. 8 shows changes in data of the respective components in a case where a certain address A$\ell$ of the memory 11 is fixed.

It is assumed that the data $D_{i,\ell}$ inputted to the data selector 7 at an interval k shown in the part (a) has become "1", as shown in the part (c). At this time, "4" is set as the output data from the data selector 7, as shown in the part (d). Meanwhile, since the output data from the data selector 7 is not "0", the output data from the data transfer circuit 8 becomes "1", as shown in the part (e), and recording data is imparted to the thermal history circuit B. In ensuing intervals k + 1, k + 2, and k + 3, "1" is each subtracted from the data by the subtraction circuit 9, as shown in the part (f).

In this process, the recording data is imparted from the data transfer circuit 8 to the thermal history circuit B four times from the interval k to k + 3 upon being triggered by an input of "1" of the data $D_{i,\ell}$ for the interval k.

Such a series of operations also hold true of the case where "1" is inputted as the data $D_{i,\ell}$ at the interval k + 5 and k + 8, and the digital delay circuit A operates just like a retriggerable monostable multivibrator. Thus, the data transfer circuit 8 outputs the recording data to the thermal history circuit B in four intervals starting from the interval when "1" is inputted as the data $D_{i,\ell}$.

That is, upon being triggered by the input data $D_{i,\ell}$, the digital delay circuit A operates in such a manner as to extend the input data a predetermined number of intervals set by the data selector 7.

A description will now be given of the operation of the thermal history circuit B.

For instance, during the period of the interval k + 5 - k + 10, the recording data $d_i'$ outputted from the data transfer circuit 8 is continuously set to "1". If such recording data $d_i'$ is transferred as it is to the printhead 19, a driving current continuously flows across a relevant heating element. As a result, the temperature of the heating element rises appreciably, thereby making it impossible to maintain uniform printing quality and possibly burning the heating element in a worst case.

Therefore, the thermal history circuit B effects data processing such as thinning out the recording data $d_i'$ on the basis of the accumulated heat temperature data stored in advance in the memory 13, as described above, before the thermal history circuit B transfers recording data $O_i$ to the printhead 19.

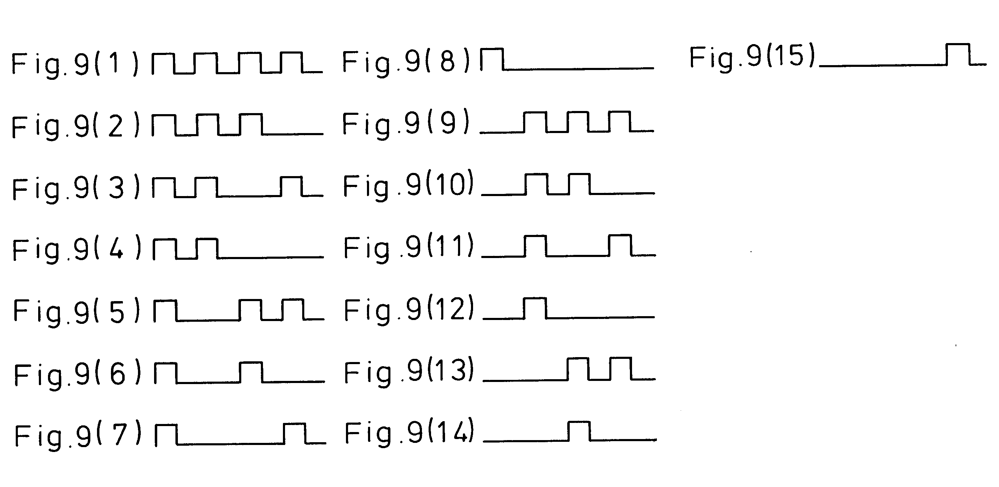

By effecting the recording of one line through four data transmissions as in this embodiment, the pattern of driving pulses applied to the heating element 5 assumes any of the 15 patterns ($2^4$ - 1 = 15) depending on how the data $D_1$ - $D_4$ for each transmission operation are fetched, as shown in Fig. 9. That is, the heating element 5 is consequently driven in accordance with any of the 15 patterns by being driven and controlled in accordance with its accumulated heat temperature.

It should be noted that although in relation to Fig. 5 a description is given that the recording of one line is effected through the transmission of data DATA and the enable signal EN' in four transmitting operations, the number of the transmitting operations is not restricted to four, and it suffices if the number is n (n is an integer of not less than two). The driving patterns in the case of n transmissions amount to $2^n$ - 1 patterns.

A detailed description will be given of such accumulated heat control.

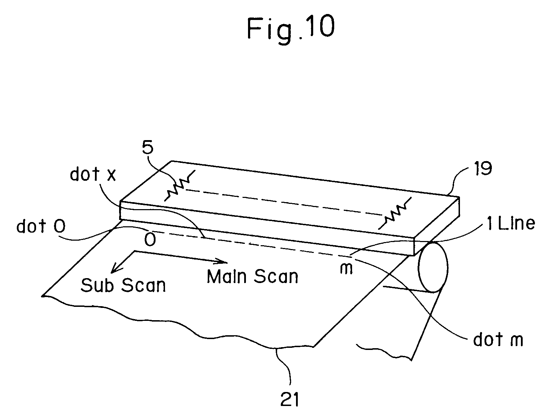

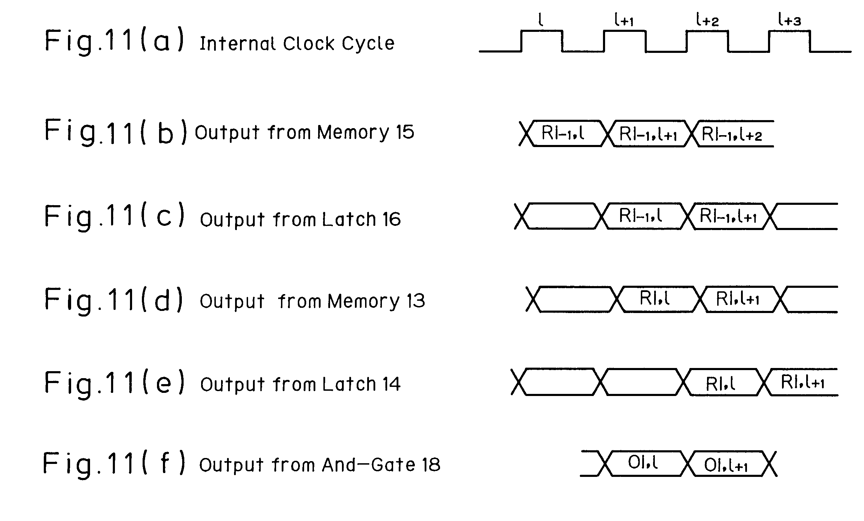

Accumulated heat temperature data corresponding to an m - xth heating element in the main scanning direction to be recorded, as shown in Fig. 10, is stored in an address Ax of the memory 15. The timing control circuit 23 transmits the address A$\ell$ to the memory 15 which has temporarily stored the accumulated heat temperature data at the $\ell$th clock pulse of the internal clock CLK shown in the part (a) of the timing chart of Fig. 11. As a result, the memory 15 outputs accumulated heat temperature data $R_{i-1,\ell}$ corresponding to an m - $\ell$th heating element, as shown in the part (b) of Fig. 11.

In the $\ell$ + 1 cycle of the internal clock CLK, the latch 16 latches the accumulated heat temperature data $R_{i-1,\ell}$, as shown in the part (c) of Fig. 11 upon the rise of the clock CLK. The accumulated heat temperature data $R_{i-1,\ell}$ latched by the latch 16 is imparted to the comparator 17 so as to be compared with the temperature data SD which has been initialized. It should be noted that the accumulated heat temperature data $R_{i-1,\ell}$ and the temperature data SD are quantized into a plurality of s bits. If, for instance, the temperature data SD has been set to 200°C, and the accumulated heat temperature data $R_{i-1,\ell}$ is 100°C, the comparator 17 outputs "1" to the AND gate 18, while if the temperature data SD has been set to 200°C, and the accumulated heat temperature data $R_{i-1,\ell}$ is 250°C, the comparator 17 outputs "0" to the AND gate 18. During this $\ell$ + 1 clock cycle, the recording data $d'_{i,\ell}$ is read by the AND gate 18 from the data transfer circuit 8, and is ANDed with the output data from the comparator 17, as shown in the part (f). The output data O$\ell$ from the AND gate 18 is imparted to the heating element 5 of the printhead 19 as the data to be actually recorded. That is, the heating element 5 of the printhead 19 is set in a recording state only when the recording data $d'_{i,\ell}$ is "1", and the accumulated heat temperature data $R_{i-1,\ell}$ is lower than the temperature data SD.

During the $\ell$ + 1 cycle, the following control is effected simultaneously with the above-described process. That is, the accumulated heat temperature data $R_{i-1,\ell}$ and the output data O$\ell$ from the AND gate 18 are inputted to the memory 13 as an address. Here, since the comparator 17 and the AND gate 18 can be constituted by high-speed gate elements, the output data O$\ell$ from the AND gate 18 settles in dozens of nano-seconds, so that if the clock cycle is assumed to be 100 nano-seconds, the reading of from the memory 13 can be completed within 1 clock cycle.

The memory 13 outputs the following accumulated heat temperature data $R_{i,\ell}$ in accordance with the address $R_{i-1,\ell}$ and the output data O$\ell$, as shown in the part (d). For instance, when the accumulated heat temperature data $R_{i-1,\ell}$ is 100°C, if O$\ell$ is 1, the memory 13 outputs bit data 180°C as the accumulated heat temperature data $R_{i,\ell}$, and, if O$\ell$ is 0, it outputs bit data 50°C as the accumulated heat temperature data $R_{i,\ell}$.

In the if $\ell$ + 2 cycle, the latch 14 latches the accumulated heat temperature data $R_{i,\ell}$ outputted from the memory 13 at the rise of the clock CLK in the $\ell$ + 2 cycle, as shown in the part (e). In addition, the data latched by the latch 14 is imparted to the other port of the memory 15 and is written in the address A$\ell$.

A series of these operations are subjected to parallel processing in the manner of a pipeline, and the accumulated heat temperature data $R_{i-1,\ell+1}$ is read from the memory 15 in the $\ell$ + 1 clock cycle.

By executing these operations m times, the printhead 19 receives m pieces of recording data. The timing control circuit 23, after transmitting m pieces of data, activates a latch pulse LAT, as shown in the part (c) of Fig. 5, and allows a driving current to flow across the heating element 5 by activating the enable signal EN' for a time t' only once. The transmission of m pieces of data and the transmission of the latch pulse LAT and the enable signal EN' are repeated a plurality of times. Fig. 5 illustrates an example in which they are repeated four times.

A description will now be given of setting the accumulated heat temperature data in the memory 13.

The change in the temperature of the heating element 5 of the print head 19 can be simulated by means of the amplitude and width of a driving pulse by using an initial temperature $T_0$ as a reference. That is, the structure of the printhead 19 is already known, and constants of the physical properties of various components are also already known. From these, the thermal response of the printhead 19 can be described by means of modeling using an equation of heat conduction. By giving an initial temperature to this equation of heat conduction and giving an amplitude and width of a driving pulse as input energy to the system, it is possible to simulate the temperature of the heating element 5 of the printhead 19 for each time through numerical calculations. It should be noted that since the equation of heat conduction is nonlinear, numerical operations are conducted by using a unidimensional finite element method, so as to simulate and estimate the state of the temperature after data transmission and create a table in the memory 13.

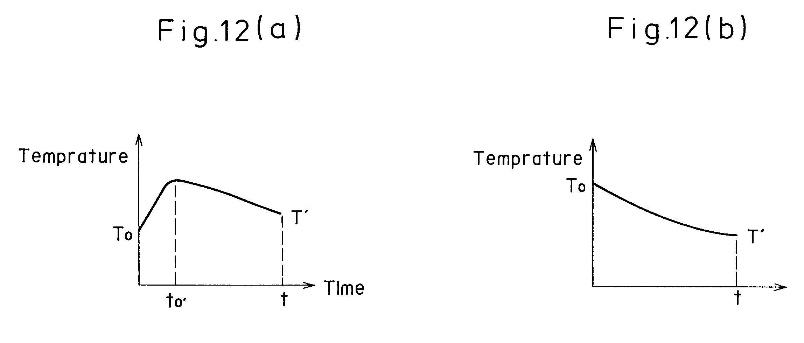

In the configuration shown in Fig. 4, since the period of transmitting m dots to the printhead 19 and the pulse width of the enable signal EN' are fixed, if the initial temperature $T_0$ can be known, the temperature after data transmission can be estimated through simulation. Fig. 12 is a diagram explaining such a state of simulation, in which the part (A) shows a state of change in the temperature in a case where the driving pulse is applied for a time t', and the part (b) shows a state of change in the temperature in a case where the driving pulse is not applied.

The temperature T' after the transmission period in cases where the driving pulse is applied and is not applied is formed into a table in advance as data by using the initial temperature $T_0$ as a parameter. That is, the accumulated heat temperature data $R_{i-1,\ell}$ is set as the initial temperature $T_0$, and the output signal $O\ell$ from the AND gate 18 is inputted to the address of the memory 13 as an on/off signal for the driving pulse. As a result, the memory 13 outputs the temperature T' after the transmission period as the bit data $R_{i,\ell}$.

The accumulated heat temperature is calculated consecutively by storing such data in the memory 13. In addition, the accumulated heat temperature data and the set temperature are compared with each other consecutively by the comparator 17, with the result that a pulse train commensurate with the accumulated heat temperature data of the past is selected from a plurality of pulse trains shown in Fig. 9. Hence, thermal history control is conducted with high accuracy.

It should be noted that in the foregoing description the temperature control is conducted in an open loop. In addition, errors occur in the simulation data depending on the ambient temperature. Accordingly, the temperature of a radiation plate of the printhead 19 is measured by the temperature sensor 20, and this measured data TD is imparted to the memory 13 as an address so as to change the data in the memory 13. In cases where the temperature of the radiation plate of the printhead 19 has risen to an excessive degree, the driving pulse is cut off to effect control so that the temperature will not rise any further.

In addition, in order to improve the printing quality in response to the chart feeding speed and changes in the ambient temperature, the driving pulse width may be made variable. In this case, it suffices to change the data read from the memory 13 by changing over the address of the memory in response to the chart feeding speed and the ambient temperature.

In accordance with this configuration, it is possible to finely set a printing pattern of the driving pulse of the printhead and improve the printing quality basically through a simple combination of a read-only memory and a comparator.

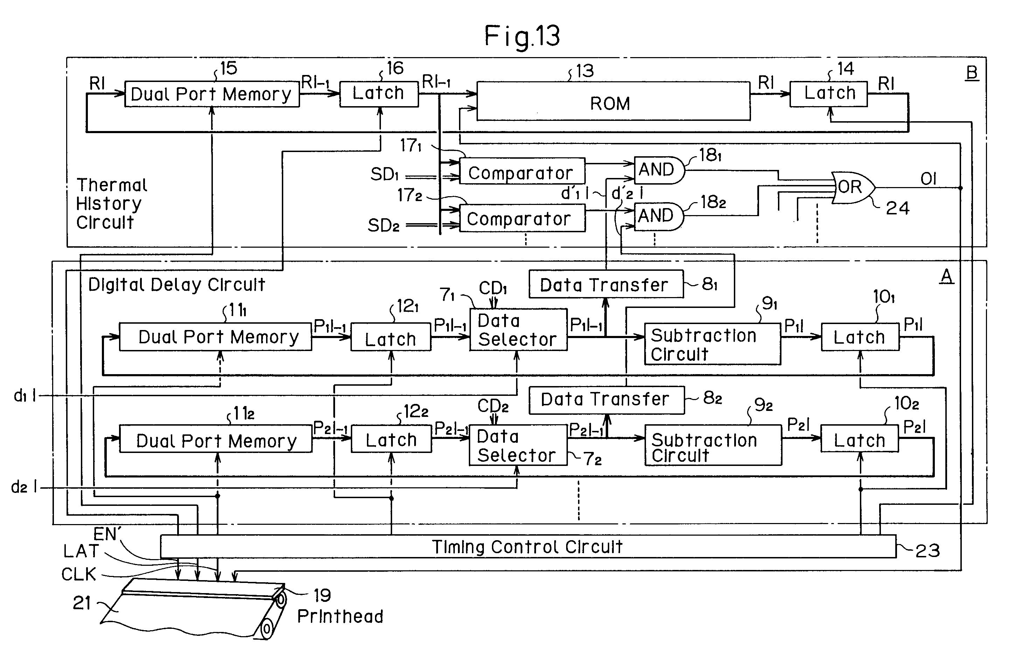

Fig. 13 is a block diagram illustrating a modification of the present invention and shows a case where two types of recording lines are used. Components that are common to those of Fig. 4 are denoted by the same reference numerals with suffixes $_1$, $_2$ attached thereto in correspondence with the type of the recording line.

That is, in Fig. 13, the digital delay circuit A is provided with two systems of digital one-shot loops each comprising the data selector 7, data transfer circuit 8, subtraction circuit 9, latches 10, 12, and memory 11 respectively having suffixes $_1$, $_2$ attached thereto. Meanwhile, the thermal history circuit B is provided with two systems of the comparator 17 and the AND gate 18 so as to process the data outputted from these digital one-shot loop systems. The arrangement provided is such that output data from these two systems of AND gates $18_1$, $18_2$ are imparted to the printhead 19 via the OR gate 24.

In this configuration, recording with different types of lines is effected as described below. Here, it is assumed that "4" is set in one data selector $7_1$ as a set value $CD_1$, and "6" is set in the other data selector $7_2$ as a set value $CD_2$.

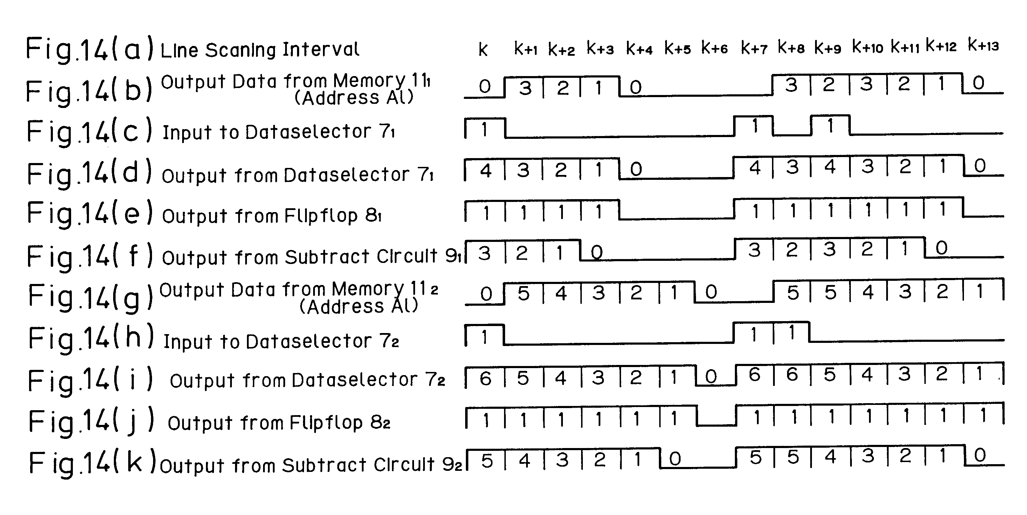

Fig. 14 is a timing chart explaining the operation and corresponds to Fig. 8 referred to earlier. In this drawing, attention is focused on an arbitrary one dot during a transmission interval, and changes of the data corresponding to that dot are shown.

When data $D_{1i}$ inputted to the data selector $7_1$ in one system of the digital delay circuit A during the interval k shown in the part (a) becomes "1" as shown in the part (c), the value "4" of $CD_1$ is set as the output data from the data selector $7_1$, as shown in the part (d). Since the output data from the data selector 7 is "4", output data $d'_{1i}$ from the data transfer circuit 81 becomes "1" as shown in the part (e), thereby imparting recording data to one input terminal of the AND gate $18_1$ of the thermal history circuit B. In the subsequent intervals k + 1, k + 2, k + 3, "1" is subtracted from the respective data by the subtraction circuit $9_1$, as shown in the part (f). Through such a process, recording data is imparted from the data transfer circuit $8_1$ to the thermal history circuit B four times from the interval k to k + 3 upon being triggered by the data $D_{1i}$ of "1" inputted to the data selector $7_1$ during the interval k.

Such a series of operation also holds true of the case where "1" is inputted as the data $D_{1i}$ during intervals k + 7 and k + 9, and the digital delay circuit A operates just like a retriggerable monostable multivibrator. Hence, the data transfer circuit $8_1$ outputs recording data to the AND gate $18_1$ of the thermal history circuit B during four intervals beginning with the interval when "1" is inputted as the data $D_{1i}$.

Such an operation is executed with respect to the other system, shown in the parts (g) - (k), with the suffix $_2$ attached thereto. However, since "6" is set in the data selector $7_2$ as data $CD_2$, recording data is imparted from the data transfer circuit $8_2$ to the AND gate $18_2$ of the thermal history circuit B six times from the interval k to k + 5 upon being triggered by data $D_{2i}$ of "1" inputted to the data selector $7_2$ during the interval k.

The same also holds true of the case where "1" is inputted as the data $D_{2i}$ during the intervals k + 7 and k + 8, and the digital delay circuit a operates just like a retriggerable monostable multivibrator. Hence, the data transfer circuit $8_2$ out-

puts recording data to the AND gate $18_2$ of the thermal history circuit B during six intervals beginning with the interval when "1" is inputted as the data $D_{2i}$.

That is, upon being triggered by the input data $D_{1i}, D_{2i}$, the digital delay circuit A operates in such a manner as to extend its input data a predetermined number of intervals set by the set data $CD_1$, $CD_2$ of the data selectors $7_1$, $7_2$, and varies the recording line width in correspondence with the set data $CD_1$, $CD_2$.

The temperature data $SD_1$, $SD_2$ of the comparators $17_1$, $17_2$ of the thermal history circuit B individually set the recording densities of the data $d'_{1i}$, $d'_{2i}$ outputted from each system of the digital delay circuit A. For instance, when the temperature data $SD_1$ of the comparator $17_1$ has been set to $150°C$, the comparator $17_1$ outputs "1" to the AND gate $18_1$ only when the temperature data $R_{1-1}$ imparted from the latch 16 is lower than $150°C$. The AND gate $18_1$ outputs a logical product of the output data from the comparator $17_1$ and the output data from the data transfer circuit $8_1$ to the OR gate 24, so that the accumulated heat temperature of the heating element is controlled to a value in the vicinity of the temperature data $SD_1$. Here, the high or low accumulated heat temperature is related to the high or low recording temperature, and the higher the accumulated heat temperature, the higher the recording density becomes. That is, the recording density can be individually set for each system by means of the temperature data $SD_1$, $SD_2$ of the comparators $17_1$, $17_2$.

Thus, in accordance with the configuration shown in Fig. 13, the recording line width can be set by means of the data $CD_1$, $CD_2$ of the data selectors $7_1$, $7_2$, and the recording density can be set by the data $SD_1$, $SD_2$ of the comparators $17_1$, $17_2$. Accordingly, by providing a setting such that, for instance, $CD_1 = 4$, $CD_2 = 6$, $SD_1 = 200°C$, $SD_2 = 150°C$, recording can be effected with a thin, dark line with respect to the system of the input data $d_{1i}$, while recording can be effected with a thick, light line with respect to the system of the input data $d_{2i}$. It should be noted that at a portion where the two kinds of lines intersect each other, the dark line is recorded preferentially by virtue of the OR gate 24.

Although in relation to Fig. 13 a description has been given of an example of two kinds of recording lines, it is possible to simultaneously record three or more kinds of recording lines by increasing the number of the systems of the digital delay circuit and the number of the systems of the thermal history circuit.

In addition, an arrangement may be provided such that a plurality of upper bits and a plurality of lower bits of one memory may be assigned to the memories $11_1$, $11_2$, respectively.

Furthermore, it is possible to further increase the number of kinds of recording lines such as a continuous line, a broken line, and a dot-dash line by controlling the continuity and discontinuity of the recording lines. In this case, the data inputted to the system of the AND gate 18 and the data inputted from the outside to the system of the data selector 7 may be subjected to on/off control at the gate.

As described above, in accordance with the present invention, it is possible to realize a recorder which excels in the reproduceability of measured waveform with small stepped portions attributable to the pitch of feeding the recording paper and which is capable of obtaining recording results of high printing quality.

**Claims**

1. A recorder for effecting recording on recording paper (21) on the basis of heat generated by selectively driving a plurality of heating elements (5) arranged at fixed intervals in such a manner as to constitute a line thermal head (19), comprising:

a thermal history circuit (B) including: a first memory (13) in which accumulated heat temperature data concerning the recording operation of said heating elements is stored in advance and which is adapted to read the accumulated heat temperature data for an ensuing cycle by using as its addresses present accumulated heat temperature data and the presence or absence of recording; a second memory (15) for temporarily storing the accumulated heat temperature data read from said first memory (13); a comparison circuit (17) for comparing the accumulated heat temperature data temporarily stored in said second memory (15) with a set temperature (SD) set in advance; and a switching element (18) for controlling the recording operation of said heating elements in correspondence with the result of comparison by said comparison circuit (17); and

a digital delay circuit (A) including: a data selector (7) for selectively outputting initially-set-number-of-driving-intervals data of said heating elements or number-of-driving-cycles data in which data is subtracted by the number of driving cycles, in accordance with the presence or absence of recording data which is consecutively renewed in synchronism with the operation of feeding the recording paper (21); a data transfer circuit (8) for transforming output data from said data selector (7) into recording data and for imparting said recording data to said switching element (18) of said thermal history circuit (B); a subtraction circuit (9) for subtracting "1" with respect to a natural number of the output data from said data selector (7); and a third memory (11) for temporarily storing output data from said subtraction circuit (9) and for imparting said data to said data selector (7).

2. A recorder according to Claim 1, wherein a plurality of systems are provided for said thermal history circuit and digital delay circuit in correspondence with a measurement channel.

3. A recorder according to Claim 2, wherein initially-set-number-of-driving-cycles data of said data selector constituting a part of said digital delay circuit is varied in accordance with said measurement channel.

4. A recorder according to Claim 2, wherein the continuity or discontinuity of a recording line is controlled.

5. A recorder according to Claim 2, wherein a set temperature set in advance in said comparison circuit of said thermal history circuit is varied in accordance with said measurement channel.

**Patentansprüche**

1. Aufzeichnungsgerät zur Durchführung einer Aufzeichnung auf Aufzeichnungspapier (21) auf der Grundlage von Wärme, die durch selektives Ansteuern einer Anzahl von in festen Abständen in der Weise, daß ein thermischer Zeilen(druck)kopf (19) gebildet ist, angeordneten Heizelementen (5) erzeugt wird, umfassend:

eine Wärmehistorieschaltung (B), enthaltend: einen ersten Speicher (13), in welchem angesammelte bzw. aufgespeicherte Wärmetemperaturdaten bezüglich der Aufzeichnungsoperation der Heizelemente vorabgespeichert sind und welcher die aufgespeicherten Wärmetemperaturdaten für einen nachfolgenden Zyklus unter Nutzung der vorliegenden aufgespeicherten Wärmetemperaturdaten und des Vorhandenseins oder Fehlens von Aufzeichnung als deren Adressen auszulesen vermag; einen zweiten Speicher (15) zum Zwischenspeichern der aus dem ersten Speicher (13) ausgelesenen aufgespeicherten Wärmetemperaturdaten; einen Vergleicherkreis (17) zum Vergleichen der aufgespeicherten, im zweiten Speicher (15) zwischengespeicherten Wärmetemperaturdaten mit einer im voraus vorgegebenen Solltemperatur (SD); und ein Schaltelement (18) zum Steuern der Aufzeichnungsoperation der Heizelemente nach Maßgabe des Vergleichsergebnisses vom Vergleicherkreis (17); sowie

eine digitale Laufzeit- oder Verzögerungsschaltung (A), enthalten: einen Datenwähler (7) zum selektiven Ausgeben von anfänglich vorgegebenen Ansteuerintervallzahldaten der Heizelemente oder Ansteuerzykluszahldaten, in denen Daten gemäß der Zahl der Ansteuerzyklen subtrahiert sind, nach Maßgabe des Vorliegens oder Fehlens von Aufzeichnungsdaten, die synchron mit dem Vorgang des Zuführens von Aufzeichnungspapier (21) fortlaufend aktualisiert werden; eine Datenübertragungsschaltung (8) zum Transformieren der vom Datenwähler (7) ausgegebenen Daten in Aufzeichnungsdaten und zum Liefern (imparting) der Aufzeichnungsdaten zum Schaltelement (18) der Wärmehistorieschaltung (B); einen Subtraktionskreis (9) zum Subtrahieren von "1" hinsichtlich einer natürlichen Zahl der vom Datenwähler (7) ausgegebenen Daten; und einen dritten Speicher (11) zum Zwischenspeichern der vom Subtraktionskreis (9) ausgegebenen Daten und zum Liefern (imparting) dieser Daten zum Datenwähler (7).

2. Aufzeichnungsgerät nach Anspruch 1, wobei eine Anzahl von Systemen für die Wärmehistorieschaltung und die digitale Verzögerungsschaltung in Entsprechung zu einem Meßkanal vorgesehen sind.

3. Aufzeichnungsgerät nach Anspruch 2, wobei die anfänglich vorgegebenen Ansteuerzykluszahldaten von dem einen Teil der digitalen Verzögerungsschaltung bildenden Datenwähler in Übereinstimmung mit dem Meßkanal variiert werden.

4. Aufzeichnungsgerät nach Anspruch 2, wobei Kontinuität oder Diskontinuität einer Aufzeichnungszeile kontrolliert oder gesteuert wird.

5. Aufzeichnungsgerät nach Anspruch 2, wobei eine im Vergleicherkreis der Wärmehistorieschaltung im voraus vorgegebene Solltemperatur in Übereinstimmung mit dem Meßkanal variiert wird.

**Revendications**

1. Enregistreur destiné à effectuer un enregistrement sur du papier à enregistrement (21) sur la base de la chaleur générée en commandant de façon sélective plusieurs éléments chauffants (5) disposés selon des intervalles fixes de manière à constituer une tête thermique de ligne (19), comprenant:

un circuit d'historique thermique (B) comportant: une première mémoire (13) dans laquelle des données de température de chaleur accumulée relatives à l'action d'enregistrement desdits éléments chauffants sont stockes à l'avance et qui est adaptée à la lecture des données de température de chaleur accumulée pour le cycle suivant en utilisant comme adresses les données de température de chaleur accumulée présentes ainsi que la présence ou l'absence d'enregistrement; une seconde mémoire (15) destinée à stocker temporairement les données de température de chaleur accumulée lues dans ladite première mémoire (13); un circuit comparateur (17) destiné à comparer les données de température de chaleur accumulée stockées temporairement dans ladite seconde mémoire (15) avec une température de réglage (SD) réglée à l'avance; et un élément de commutation (18) destiné à commander l'action d'enregistrement desdits éléments chauffants conformément au résultat de la comparaison effectuée par ledit circuit comparateur (17); et

un circuit à retard numérique (A) comportant un sélecteur de données (7) destiné à fournir en sortie de façon sélective les données du nombre d'intervalles de commande réglé initialement desdits éléments chauffants ou bien les données du nombre de cycles de commande dans lequel les données sont soustraites du nombre de cycles de commande, en fonction de la présence ou de l'absence des données d'enregistrement qui sont renouvelées de façon consécutive en synchronisme avec l'action d'alimentation du papier à enregistrement (21); un circuit de transfert de données (8) destiné à transformer les données de sortie provenant dudit sélecteur de données (7) en données d'enregistrement et à appliquer lesdites données d'enregistrement audit élément de commutation (18) dudit circuit d'historique thermique (B); un circuit soustracteur (9) destiné à soustraire "1" à un nombre naturel des données de sortie provenant dudit sélecteur de données (7); et une troisième mémoire (11) destinée à stocker temporairement des données de sortie provenant dudit circuit soustracteur (9) et à appliquer lesdites données audit sélecteur de données (7).

2. Enregistreur selon la revendication 1, dans lequel plusieurs systèmes sont prévus pour ledit circuit d'historique thermique et pour ledit circuit à retard numérique en correspondance avec un canal de mesure.

3. Enregistreur selon la revendication 2, dans lequel on fait varier conformément audit canal de mesure les données du nombre de cycles de commande réglé initialement dudit sélecteur de données qui constitue une partie dudit circuit à retard numérique.

4. Enregistreur selon la revendication 2, dans lequel la continuité ou la discontinuité d'une ligne d'enregistrement est commandée.

5. Enregistreur selon la revendication 2, dans lequel on fait varier conformément audit canal de mesure la température de réglage réglée à l'avance dans ledit circuit comparateur dudit circuit d'historique thermique.

# Fig.1

Fig.2 (a) DATA

Fig.2 (b) CLK

m pulses

Fig.2 (c) LAT

Fig.2 (d) EN′

# Fig.3

# Fig.4

Thermal History Circuit  B

RI → | Dual Port Memory 15 | →RI-1→ | Latch 16 | →RI-1→ TD 13 | Address Input   Data Output   ROM | →RI→ | Latch 14 | →RI

RI-1 → | Comparator |—17→ | AND 18 |
SD ⇒

OI

A  Digital Delay Circuit

PI → | Dual Port Memory 11 | →PI-1→ | Latch 12 | →PI-1→ | Data Selector 7 | →PI-1→ | Subtraction Circuit 9 | →PI→ | Latch 10 | →PI

CD
li
di

| Data Transfer 8 |

li

| Timing Control Circuit | 23

EN′
LAT
CLK

TD ← Temprature
20
19 — ABC----
21

22 — Printhead

EP 0 503 120 B1

Fig.5 ( a ) DATA

D₁  D₂  D₃  D₄  D₅

Fig.5 ( b ) CLK

m dots   m dots   m dots   m dots   m dots

Fig.5 ( c ) LAT

Fig.5 ( d ) EN′

to′   to′   to′   to′   to′

1 Line Printing Sequence

1 Paper Feed Step (1/4 pitches×4)

EP 0 503 120 B1

# Fig.6

Fig.7(a) Internal Clock Cycle

Fig.7(b) Output from Memory 11

Fig.7(c) Output from Latch 12

Fig.7(d) Output from Subtract Circuit 9

Fig.7(e) Output from Latch 10

Fig.8(a) Line Scaning Interval

K+1  K+2  K+3  K+4  K+5  K+6  K+7  K+8  K+9  K+10 K+11 K+12

Fig.8(b) Output Data from Memory 11
(Address Al)

0 | 3 | 2 | 1 | 0 | 0 | 3 | 2 | 1 | 3 | 2 | 1 | 0

Fig.8(c) Input dl.l to Dataselector 7
Select Pin

1 | | | 1 | 1

Fig.8(d) Output from Dataselector 7

4 | 3 | 2 | 1 | 0 | 4 | 3 | 2 | 4 | 3 | 2 | 1 | 0

Fig.8(e) Output from Flipflop 8

1 | 1 | 1 | 1 | 0 | 1 | 1 | 1 | 1 | 1 | 1 | 1

Fig.8(f) Output from Subtract Circuit 9

3 | 2 | 1 | 0 | 0 | 3 | 2 | 1 | 3 | 2 | 1 | 0 | 0

EP 0 503 120 B1

Fig.9(1)    Fig.9(8)    Fig.9(15)

Fig.9(2)    Fig.9(9)

Fig.9(3)    Fig.9(10)

Fig.9(4)    Fig.9(11)

Fig.9(5)    Fig.9(12)

Fig.9(6)    Fig.9(13)

Fig.9(7)    Fig.9(14)

EP 0 503 120 B1

# Fig.10

EP 0 503 120 B1

Fig.11(a) Internal Clock Cycle

$l$  $l+1$  $l+2$  $l+3$

Fig.11(b) Output from Memory 15

$RI-1,l$  $RI-1,l+1$  $RI-1,l+2$

Fig.11(c) Output from Latch 16

$RI-1,l$  $RI-1,l+1$

Fig.11(d) Output from Memory 13

$RI,l$  $RI,l+1$

Fig.11(e) Output from Latch 14

$RI,l$  $RI,l+1$

Fig.11(f) Output from And—Gate 18

$OI,l$  $OI,l+1$

EP 0 503 120 B1

EP 0 503 120 B1

Fig.12(a)

Fig.12(b)

21

# Fig.13

**B**

RI → Dual Port Memory [15] → RI-1 → Latch [16] → RI-1 → ROM [13] → RI → Latch [14] → RI

Thermal History Circuit

$17_1$

SD₁ → Comparator → AND [$18_1$]

$17_2$ → $d'_1 l$ ~ $d'_2 l$

SD₂ → Comparator → AND [$18_2$] → OR [24] → OI

**A**

Digital Delay Circuit

Data Transfer [$8_1$]  CD₁

Dual Port Memory [$11_1$] → P₁l-1 → Latch [$12_1$] → P₁l-1 → Data Selector [$7_1$] → P₁l-1 → Subtraction Circuit [$9_1$] → P₁l → Latch [$10_1$] → P₁l

d₁ l

Data Transfer [$8_2$]  CD₂

Dual Port Memory [$11_2$] → P₂l-1 → Latch [$12_2$] → P₂l-1 → Data Selector [$7_2$] → P₂l-1 → Subtraction Circuit [$9_2$] → P₂l → Latch [$10_2$] → P₂l

d₂ l

EN'
LAT
CLK

Timing Control Circuit [23]

21  Printhead [19]

EP 0 503 120 B1

EP 0 503 120 B1

Fig.14(a) Line Scaning Interval    k   K+1   K+2   K+3   K+4   K+5   K+6   K+7   K+8   K+9   K+10   K+11   K+12   K+13

Fig.14(b) Output Data from Memory $11_1$ (Address Al)

Fig.14(c) Input to Dataselector $7_1$

Fig.14(d) Output from Dataselector $7_1$

Fig.14(e) Output from Flipflop $8_1$

Fig.14(f) Output from Subtract Circuit $9_1$

Fig.14(g) Output Data from Memory $11_2$ (Address Al)

Fig.14(h) Input to Dataselector $7_2$

Fig.14(i) Output from Dataselector $7_2$

Fig.14(j) Output from Flipflop $8_2$

Fig.14(k) Output from Subtract Circuit $9_2$